# EUROPEAN PATENT SPECIFICATION

(11) **EP 1 561 171 B1**
(45) Date of publication and mention of the grant of the patent: **06.06.2007**
(21) Application number: 03759666.5
(22) Date of filing: 01.10.2003
(51) Int. Cl.: H04L 29/08

(54) **SYSTEM AND METHOD FOR DELIVERY OF INFORMATION BASED ON WEB PAGE CONTENT**
SYSTEM ZUM ABLIEFERN VON INFORMATIONEN AUF DER BASIS EINES WEBSEITENINHALTS
SYSTEME ET PROCEDE DE DISTRIBUTION D'INFORMATIONS EN FONCTION D'UN CONTENU DE PAGE WEB

(30) Priority: 12.11.2002 US 292924
(43) Date of publication of application: 10.08.2005
(73) Proprietor: Claria Corporation, Redwood City, CA 94063 (US)
(72) Inventor: PENNELL, Mark, E., Austin, TX 78717 (US); MCFADDEN, Jeffrey, A., Hillsborough, CA 94010 (US); MARTIN, Anthony, G., Los Altos, CA 94022 (US)
(74) Representative: Banzer, Hans-Jörg
(86) International application number: PCT/US2003/031196
(87) International publication number: WO 2004/044673

(56) References cited:
- WO-A-01/86456
- US-A1- 2002 143 659

## Description

### FIELD OF THE INVENTION

This invention relates to computer technology, and more particularly but not exclusively relates to presenting information in a computer network environment.

### BACKGROUND OF THE INVENTION

The Internet computer network was originally designed as a communications link to facilitate the exchange of scientific information between governmental laboratories and educational institutions. However, in recent years, the increased use of the World Wide Web (WWW) has fueled explosive growth of the Internet that has extended beyond the scientific community and, indeed, into homes, businesses and classrooms. The WWW refers to a collection of Internet servers that typically utilize Hypertext Transfer Protocol (HTTP) as an applications protocol to provide users with access to files for communicating text, graphics, sound, video, etc. HTTP, in turn, may use a page description language called Hypertext Markup Language (HTML) to specify the format of web pages that are displayed to the users. HTML pages can include hypertext links to other servers and files, with the URL's of the target servers stored or embedded within the links.

Links present in a web page may appear to a user in a variety of forms. For example, a link may appear as underlined text, as bolded text, as text having a different color as surrounding text, or as text having some other form designed to draw the attention of the user such that the link is easily identified as such. When a user selects a link (e.g:, by "clicking" on the link with an input device such as a computer mouse), the browser makes a Transmission Control Protocol/Internet Protocol (TCP/IP) request to the server identified by the URL specified in the link, and in return receives a web page from the identified server. A link may also be embedded within a graphical image displayed on the user's computer monitor or display. When the geographical area of the image is selected by the user, the browser again makes an TCP/IP request to the server identified by the specified URL. Thus, a user may navigate (i.e., "surf") between various servers to find and retrieve HTML pages or documents of interest.

As use of the Internet has become more pervasive, merchants have looked to the Internet as a new advertising medium for their products and services. Merchants who sponsor their own web sites typically include advertising material within their site's pages. However, creating and maintaining a stand-alone web site requires a substantial amount of resources and may be beyond the means of many merchants. Also, the time and expense required to set up a stand-alone site makes this technique unsuitable for certain seasonal, limited time, or one-shot usage. Further, the audience of this advertising material may be limited to the extent the merchant can attract users to visit its own site.

A technique that has been used to address these problems is the deployment of advertisements on the web sites of other sponsors or content providers who agree to sponsor the advertisements. A simple advertisement suitable for such deployment can take the form of a graphical banner. Such a banner advertisement can include an image related to the product or service being advertised, typically stored as a graphics file (e.g., a ".gif" file), and displayed according to the HTML description of the sponsoring page. A merchant is often required to pay the sponsor an advertising fee for the privilege of deploying its banner on the sponsor's site. Accordingly, the banner may be widely deployed on many sites. Typical advertising banners involve only one-way communication, and do not take advantage of the Internet's interactive capabilities which could otherwise be used to solicit data from prospective customers or users for generating purchase orders or leads.

Another technique that has been used to address these problems is the deployment of targeted banner advertisements on, for example, search engines. The search engine parses search requests and returns the search results and typically a banner advertisement related to the search request. For example, if a person searched for a crime-related site, a banner advertisement for a criminal defense attorney may appear in addition to the search results. However, targeted banner advertisements are limited because they require a user to enter data in order for a targeted banner advertisement to be presented.

WO 01/86456 A1, which serves as a basis for the preamble of claim 1, discloses a method of scheduling and delivering low bandwidth media upon detecting high bandwidth media, in which low bandwidth media including advertising information may be displayed when an interruption of a high bandwidth data stream is detected.

US 2002/0143659 A1 discloses a method of identifying a product represented on a web page in which the web page is analyzed based on a structured graph representation of the web page on a user computer and, depending on a result of the analyzing, information is transmitted from the user computer to a server computer.

Accordingly, what is needed are improved systems and techniques for selectively distributing messages to viewers.

### SUMMARY OF THE INVENTION

According to the present invention, this object is achieved by methods and a system as defined by the independent claims. The dependent claims define preferred or advantageous embodiments.

The present invention provides a system and method for determining when to present information to a user based on web page content. In one embodiment, the system includes a retriever engine, a display engine, and a parser engine. The retriever engine transmits a domain to a server. In response, the server transmits information to be displayed and in-context rules, which are both received by the retriever engine. The parser engine parses the HTML source code of a web page using the in-context rules and decides whether to display the information based on the parsing. If it is determined that the information should be displayed, the display engine displays the information. The display engine may display the information in a pop-up window; at a user-specified position; at a default position; and/or over an HTML banner. The parser engine may further determine whether to display the information based on a URL substring.

In another embodiment, the method comprises obtaining information for displaying to a user; obtaining rules for displaying the information; parsing a web page using the obtained rules; and determining to display the obtained information based on the parsing. If it determined to display the information, the information is displayed. The information can be displayed in a pop-up window; at a user-specified position; at a default position; and/or over an HTML banner. The determining may be further based on a URL substring.

### DESCRIPTION OF THE DRAWINGS

Non-limiting and non-exhaustive embodiments of the present invention are described with reference to the following figures, wherein like reference numerals refer to like parts throughout the various views unless otherwise specified.
Figure 1 is a schematic diagram of a computer network framework for a network messaging system in accordance with an embodiment of the present invention;
Figure 2 is a block diagram of a representative hardware environment in accordance with an embodiment of the present invention;
Figure 3 is a block diagram illustrating a CMU client system;
Figure 4 is a block diagram illustrating a CMU server system;
Figure 5 is a block diagram of a CMU; and
Figure 6 is a flowchart illustrating a method of delivering information based on web page content.

### DETAILED DESCRIPTION

The following description is provided to enable any person having ordinary skill in the art to make and use the invention, and is provided in the context of a particular application and its requirements. Various modifications to the embodiments will be readily apparent to those skilled in the art, and the principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein.

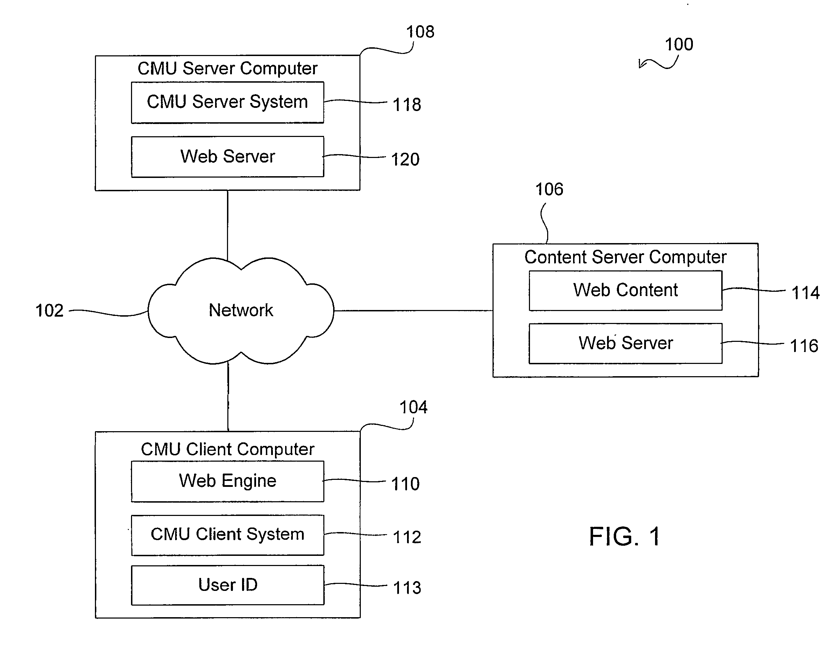

Fig. 1 is a schematic diagram of a computer network framework 100 for a Continuous Messaging Unit (CMU) network system in accordance with an embodiment of the present invention. A network 102, such as for example, a client-server network, a wide area network (e.g., the Internet), or the like, communicatively couples together one or more CMU client computers 104, one or more content server computers 106, and one or more CMU server computers 108.

CMU client computer 104 may be any type of computer or other device (e.g., laptop, PDA, wireless phone, etc.) that provides an end-user access to a network. In one embodiment, CMU client computer 104 may be a personal computer running on operating system such as for example, the Microsoft Windows^{™}, Apple Macintosh^{™}, Linux, or UNIX operating systems. CMU client computer 104 may also include a web engine 110, which can comprise a web browser such as the Microsoft Internet Explorer^{™} or Netscape Navigator^{™} in specific embodiments. An end-user utilizing CMU client computer 104 employs web engine 110 for accessing information and web pages stored on various web sites (e.g., sites hosted content server computer 106) coupled to the network 102. CMU client computer 104 may also include a CMU client system 112 for receiving, processing, and displaying various CMUs received via the network 102.

Content server computer 106 may include web content 114 and a web server 116. As can be appreciated by those skilled in the art, such a content server computer 106 and other server computers in the specific embodiments of the present invention, may be implemented using any appropriately configured computer including, for example server computers available from Sun Microsystems^{™}, the Hewlett-Packard Company^{™}, or International Business Machines^{™}. Web content 114 may include any information accessible via the network, including web pages and the like. In one embodiment, web content 114 may be of the type generally available over the Internet for browsing. For example, a web page of the present invention may include an HTML file containing news, maps, coupons, offers for services, directories, "for sale" merchandise, and/or other types of information that attract end-users to the content server computer 106. The web server 116 may include program code that allows the content server computer 106 to be in communication with the network 102.

The CMU server computer 108 may be any type of computer comprising a web server 120 that is capable of serving CMUs holding information for presentation/display by the CMU client computer 104. The information may include information of any type, such as, for example, advertising information. CMU server computer 108 may also include a CMU server system 118, which is in communication with the network 102.

As the user accesses sites coupled to the network 102 (commonly known as "surfing the Internet") utilizing a web engine 110 installed and running on the CMU client computer 104, from one site or domain (e.g., www.yahoo.com) to another (e.g., www.amazon.com), the CMU client system 112 sends a request to a CMU server computer 108 via the network 102. The request preferably contains at least two pieces of information: a unique customer ID of the user (i.e., a user ID) 113 and a domain being viewed by the user.

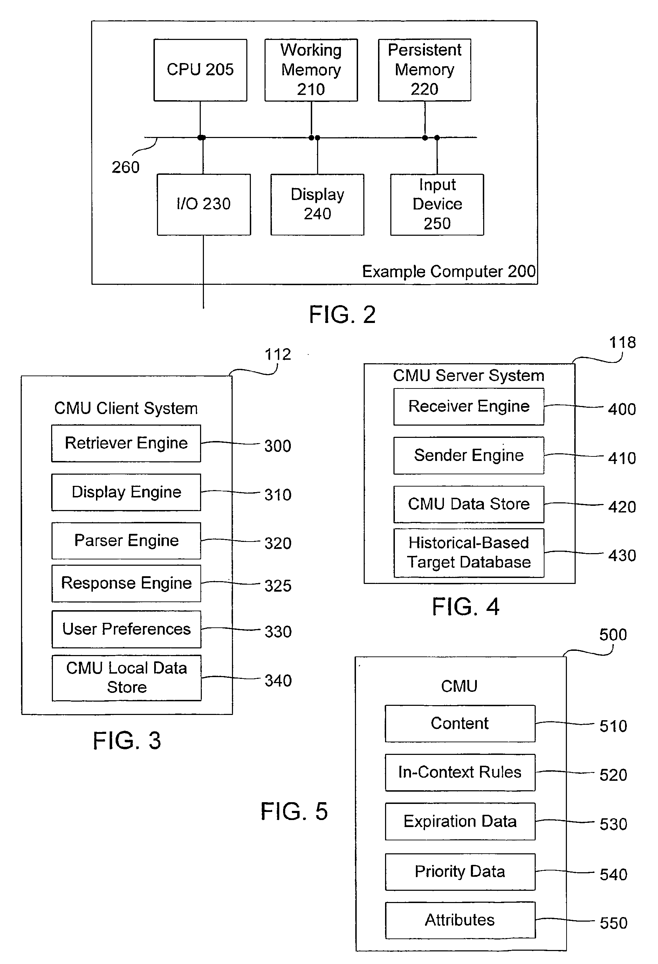

The CMU server computer 108 receives the request from the CMU client system 112 and performs a check to determine if there are one or more CMUs pending for the specified domain and/or user ID 113. If it is determined that there is at least one CMU associated with the specified domain, then, in one embodiment of the invention, the CMU server computer 108 queries an historical-based targeting database 430 (Figure 4) to determine if there is one or more specific CMUs pending for this domain for this user ID 113. If there is, then the specific CMU(s) is returned to the CMU client system 112 on the user's CMU client computer 104. In an alternative embodiment of the invention, the CMU server computer 108 does not query the historical-based targeting database 430 and instead simply sends any specific CMUs pending for this domain regardless of the user ID 113. In another embodiment, the request does not include a user ID 113 and therefore, the CMU server computer 108 sends CMUs that are independent of a user ID 113.

The CMU(s) may include two components: in-context rules 520 (Figure 5) and the content (information) 510 (Figure 5) to be presented to the user. The content 510 may include text, graphics, animation, video, sound, and or other data types (e.g., tactile feedback). The in-context rules 520 dictate the circumstances in which the CMU content 510 is displayed to the user. Some illustrative examples of some in-context rules include: (1) domains at which the content from the retrieved CMUs should be presented to the user; (2) specific web pages at which the content from the retrieved CMUs should be presented to the user; (3) URL substrings that, should they be found in the current URL, cause the content from the CMU to be presented; (4) time and date information; and (5) content of the web page being viewed by a user.

Also, the rules 520 may include/reference almost any kind of relevant information, such as, for example, specific known attributes about the user like frequent flyer affiliation, club memberships, type of credit card used, hobbies and interests, basic demographic information (gender, age, income, etc.), etc. The content 510 may also include standard HTML, including text, images, figures, colors, sound files that will automatically play upon display of the message, other types of multi-media files/content, etc.

Upon receiving the CMU from the CMU server system 118, the CMU client system 112 may store the CMU in a local data store 340 (Figure 3) for subsequent presentation. As the user continues to surf from page to page, the CMU client system 112 examines the user's context (e.g., URL, date/time, etc.) and the content of the web page being surfed and looks for CMUs stored in the data store 340 with in-context rules 520 that match. In an alternative embodiment, the CMU client system 112 only examines the content of the web page being surfed and looks for CMUs stored in the data store 340 with in-context rules 520 that match. Upon a match being found, the CMU client system 112 displays the content 510 from the matching CMU.

In one embodiment, the local data store 340 may buffer messages received from the CMU server system 118. This enables the CMU client system 112 to have several CMUs at any given time. For example, the local data store 340 may contain a CMU relating to a current web site or web page the user is visiting and additional CMUs relating to similar web sites or web pages. As an illustration, the local data store 340 may contain a CMU relating to books when the end-user is browsing the catalog of an on-line bookstore, and additional CMUs relating to movies that may also be available from that on-line bookstore. This way, a CMU relating to movies can be routed to the appropriate presentation format module as soon as the user navigates to a movie-related web page.

In one embodiment, the CMU client system 112 may open an independent window on a visual display coupled to the user (i.e., the user's screen) that presents/displays the CMU content 510. The specific vehicle to use may be identified as an attribute 550 (Figure 5) embedded in the CMU 500 and selected during creation of the CMU 500.

As an option, the CMU 500 may include one or more expiration dates 530 (Figure 5). This expiration date 530 may be monitored by the local data store 340 and used to remove expired messages from the CMU client system 112. As a further option, the CMU 500 may include priority information 540 (Figure 5) to determine the priority of CMUs that are to be presented to the user when a plurality of CMUs satisfy the criteria of the in-context rules 520.

In another embodiment, CMUs 500 may be available on the CMU server computer 108 that are to be presented to any user that satisfies the appropriate in-context rules 520. Such CMUs may be delivered to the CMU client computer 104 by the CMU client system 112 without requiring matching historical-based profile in the targeting database 430. In one embodiment, the client computer 104 and/or the server 108 may include a data store of user preferences, profile and historical information about the user for use in determining whether a rule has been satisfied.

Figure 2 illustrates a block diagram of an example computer 200 in a specific embodiment of the present invention. As illustrated by Figure 2, the computer 200 can embody one or more of the elements illustrated by Figure 2 in various specific embodiments of the present invention. While other application-specific alternatives might be utilized, it will be presumed for the sake of clarity that the elements comprising the computer 200 are implemented in hardware, software or some combination thereof by one or more processing systems consistent therewith, unless otherwise indicated.

In an embodiment of the invention, CMU server system 118, web server 120, web engine 110, CMU client system 112, and web server 116 may include or be resident on example computer 200. The example computer 200 includes a central processing unit (CPU) 205; working memory 210; persistent memory 220; input/output (I/O) interface 230; display 240 and input device 250, all communicatively coupled to each other via system bus 260. CPU 205 may include an Intel Pentium^{®} microprocessor, a Motorola Power PC^{®} microprocessor, or any other processor capable to execute software stored in persistent memory 220. Working memory 210 may include random access memory (RAM) or any other type of read/write memory devices or combination of memory devices. Persistent memory 220 may include a hard drive, read only memory (ROM) or any other type of memory device or combination of memory devices that can retain data after example computer 200 is shut off. I/O interface 230 is communicatively coupled, via wired or wireless techniques, to other devices or networks. Display 240 may include a cathode ray tube display or other display device. Input device 250 may include a keyboard, mouse, or other device for inputting data, or a combination of devices for inputting data.

One skilled in the art will recognize that the example computer 200 may also include additional devices, such as network connections, additional memory, additional processors, LANs, input/output lines for transferring information across a hardware channel, the Internet or an intranet, etc. One skilled in the art will also recognize that the programs and data may be received by and stored in the example computer 200 in alternative ways.

Figure 3 is a block diagram illustrating the CMU client system 112. The CMU client system 112 includes a retriever engine 300, a display engine 310, a parser engine 320, a response engine 325, a user preferences file 330, and a CMU local data store 340. Upon visiting a domain with web engine 110, the retriever engine 300 transmits a message to CMU server system 118 including the domain visited and the user ID 113. In an alternative embodiment, the retriever engine 300 only transmits a request for a CMU (e.g., domain dependent). In response, the CMU server system 118 transmits at least one CMU, such as CMU 500 (Figure 5) to the CMU client system 112. The retriever engine 300 receives this at least one CMU 500 and stores it in CMU local data store 340. For example, a user may visit the Amazon.com site. The retriever engine 300 transmits the domain "www.amazon.com" and the user's user ID 113 to CMU server system 118, which in turn transmits back a CMU 500 having an advertisement for a book by Tom Clancy. The CMU 500 also has in-context rules 520 that activate the advertisement upon satisfying certain criteria, which may include finding certain keywords in the HTML source code of the web page being viewed. For example, keywords may include "techno thriller", "adventure", and/or authors' names of books in the techno thriller genre.

The display engine 310 displays the content of the received CMU 500 when instructed to by the parser engine 320. The display engine also displays the content of the received CMU according to attributes 550 (Figure 5) of the CMU. For example, attributes 550 may define the content 510 to be displayed as a banner ad or a pop-up ad. In an embodiment of the invention, the display engine 310 can display the CMU content 510 over a banner advertisement or other advertisement.

Example user preferences 330 include preferences for positioning content 510 from CMUs for display to the user and preferences controlling delay time for display of CMUs.

The parser engine 320 determines when content from the received CMU 500 should be displayed. The parser engine 320 reviews the HTML source code of every page visited and determines if any keywords specified in the in-context rules 520 match. Alternatively, or in addition, the parser engine 320 can look for patterns of keywords. In another embodiment of the invention, the parser engine 320 uses regular expressions and/or other search/analysis techniques to determine when to display content from the CMU 500. Continuing the example begun above, the parser engine 320 could look for the keywords "techno thriller" in the HTML source code of each page of the Amazon.com website visited. Upon finding a match, the response engine 325 instructs the display engine 310 to present the Tom Clancy related content 520 in the CMU 500 according to attributes 550 specified in the CMU 500. If there are two or more CMUs 500 that have in-context rules 520 that would lead to multiple matches for a single web page, then the response engine 325 can use the priority set in the CMU 500 to determine which content 510 to display (e.g., whichever CMU 500 had a higher priority would get its content 510 displayed). In addition to content of the HTML source code, the parser engine 320 can determine which CMU to display based on specific web pages of a domain at which the retrieved CMUs 500 should be presented to the user; URL substrings that, should they be found in the current URL, will cause the content 510 to be presented; and/or time and date information. Priority information could differ based on the domain, search string located, etc.

Figure 4 is a block diagram illustrating the CMU server system 118. The CMU server system 118 comprises a receiver engine 400; a sender engine 410; a CMU data store 420; and a historical-based targeting database 430. The receiver engine 400 receives a request that contains two pieces of information: a unique customer ID of the user (i.e., a user ID) 113 and a current domain being viewed by the user. Alternatively, although not an embodiment, the request may be domain independent. In response, the sender engine 410 transmits at least one CMU from CMU data store 420 to the CMU client system 112. For example, the receiver engine 400 may receive a user ID 113 and the domain name "http://www.amazon.com". In response, the sender engine 410 sends a CMU 500 to the CMU client system 112 having content 510 relevant to items capable of being purchased at Amazon.com and with in-context rules 520 that are associated with content of an Amazon.com web page relating to the items capable of being purchased. For example, a CMU 500 might include content 510 related to a new Tom Clancy novel with in-context rules 520 to search for HTML source code containing the words "techno thriller" and/or the name of authors of other techno thriller novels.

The CMU data store 420 includes CMUs 500 for distribution to CMU client systems 112. In an embodiment of the invention, the CMU data store 420 can purge itself of CMUs 500 that have expired, as indicated by their expiration dates 530.

The sender engine 410 can also use historical-based targeting database 430 to determine which CMUs 500 to transmit to the CMU client system 112. The historical-based targeting database 430 lists CMUs 500 to transmit based on both User ID 113 and domain name. Historical-based targeting can be used to select CMUs 500 for users based on user behaviors and/or attributes. For example, CMUs 500 may be selected based upon user navigation behavior, including domains visited, number of pages viewed, time spent at sites, etc.

Figure 5 is a block diagram of a CMU 500. The CMU 500 includes content 510; in-context rules 520; expiration data 530; priority data 540; and attributes 550. The content 510 includes information of any type, such as advertising information. For example, the content 510 can include an advertisement for a specific book. In-context rules 520 dictate the circumstances in which the message content 510 is displayed to the user. For example, the in-context rules 520 may dictate displaying the advertisement for a specific book when specific keywords relating to the book are found in the HTML source code of a web page being viewed.

Expiration data 530 includes data indicating when the CMU 500 expires and should no longer be presented to a user. For example, if an advertiser only wants advertisements displayed for a specific time period, e.g., one month after release of a new novel, the CMU 500 can include an expiration date in expiration data 530 set to one month after release of the novel. In an embodiment of the invention, the expiration data 530 can be updated remotely by CMU server system 118. For example, an advertiser may wish to expand the duration of an advertising campaign and therefore CMU server system 118 can send a request to the CMU client system 112 to update any CMUs 500 stored in local data store 340 with new expiration data 530. The priority data 540 indicates a priority level for the CMU 500 so that if two matching CMUs 500 are selected, the CMU 500 with the highest priority is displayed. The attributes 550 indicate how the content 510 should be displayed or otherwise presented. For example, the content 510 could be displayed in a banner advertisement or a pop up advertisement.

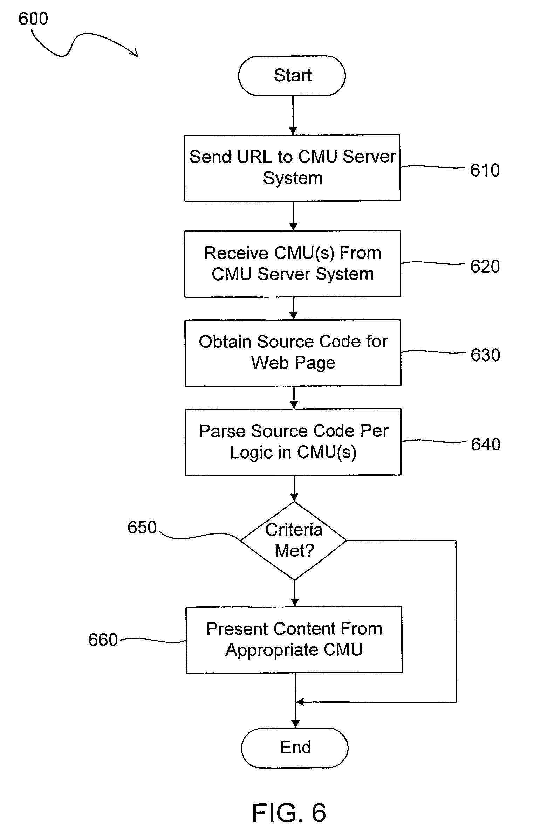

Figure 6 is a flowchart illustrating a method 600 of delivering information based on web page content. In an embodiment of the invention, the CMU client system 112 executes method 600. The method 600 comprises first sending (610) a URL or domain of a web page being viewed by a user with web engine 110 to CMU server system 118. In addition, a user ID, such as user ID 113, can also be sent to CMU server system 118. Next, at least one CMU 500 is received (620) from the CMU server system 118 based on the specified domain and potentially other factors. The CMU 500 can then be stored in CMU local data store 340. The CMU includes at least content 510 and in-context rules 520. In an alternative embodiment of the invention, a plurality of CMUs can be received for a single domain. For example, for the domain http://www.amazon.com, CMUs including advertisements for multiple books may be received (620). In another embodiment of the invention, CMUs may already be stored in the CMU client system 112 and therefore sending (610) and receiving (620) need not be done.

After receiving (620), the source code for the web page being viewed is obtained (630) and then parsed (640). Parsing (640) includes examining the code (e.g., HTML) of a URL for content that matches the in-context rules 520 of the CMLT(s) 500 received for the domain. In an alternative embodiment, the parsing (640) can be done irrespective of domain (e.g., only compare all CMU 500 in-context rules 510 against HTML source content). In another embodiment, parsing (640) can be based on specific web pages at which the retrieved messages should be presented to the user; URL substrings that, should they be found in the current URL, will cause the message to be presented; and/or time and date information.

If the criteria specified in the in-context rules are met (650), then the content 510 from the CMU 500 is presented (660). For example, if the in-context rules 520 specify the words "techno thriller" in HTML source code, then the content 510 will be presented (660) upon finding the words "techno thriller" in the HTML source code. If the CMU 500 includes attributes 550, then the content 510 can be presented (660) according to settings in the attributes 550. Further, if multiple CMUs 500 match the criteria set by their respective in-context rules 520, then the CMU 500 having the highest priority setting can be presented (660). The method 600 then ends. If there is no CMU having in-context rules with matching criteria, the method 600 ends without displaying any CMU content.

While various embodiments have been described above, it should be understood that they have been presented by way of example only, and not limitation. For example, all program code can be source code, object code, interpreted code, mobile code, etc. Thus, the breadth and scope of an embodiment should not be limited by any of the above-described exemplary embodiments, but should be defined only in accordance with the following claims and their equivalents.

## Claims

1. A method for presenting content to an internet user of a client computer (104), comprising the steps of:
downloading a web page from a first server (106) to the client computer (104) via the internet (102); and
employing a resident client continuous messaging unit (112), including the steps of
transmitting a URL of the web page to a messaging server (108);
receiving from the messaging server (108) a continuous message unit (500), including context rules (520) and content (510) associated with the rules (520);
**characterized in that** said step of employing the resident client continuous messaging unit (112) further includes the steps of
parsing the title, context and content of the web page;
comparing the results of the parsing step with the context rules (520) to determine if any such rules (520) are satisfied;
responding to a satisfaction of a rule by directing the client computer (104) to display to the user the content (510) associated with such rule.

2. The method of claim 1, wherein the rules are for a specific domain.

3. The method of claim 1, further comprising presenting the content (510) associated with such rule in dependence on a result of said comparing step.

4. The method of claim 3, wherein the presenting presents the information in a pop-up window.

5. The method of claim 3, wherein the presenting presents the information at a user-specified position.

6. The method of claim 3, wherein the presenting presents the information at a default position.

7. The method of claim 3, wherein the presenting presents the information over an HTML banner.

8. The method of claim 1, wherein the determining is further based on a substring of the URL.

9. A computer-readable medium having stored thereon instructions for executing, when used in a computer system, the method according to any one of claims 1-8.

10. A system, comprising:
a client computer (104), including
web engine means (110) for downloading a web page from a first server (106) to the client computer (104) via the internet (102);
communication means (300) for
transmitting the URL of the web page to a second server (108); and
receiving from the second server (108) a continuous message unit (500),
including context rules (520) and content (510) associated with such rules (520);
**characterized in that** said client computer (104) further includes
Continuous Messaging Unit means (112; 310, 320, 325) for
parsing the title, context and content of the web page;
comparing the results of the parsing step with the context rules (520) to determine if any such rules (520) are satisfied; and
responding to a satisfaction of a rule by displaying to the user the content (510) associated with such rule (520).

11. The system of claim 10, wherein the rules are for a specific domain.

12. The system of claim 10, further comprising a display engine capable to present the content (510) associated with such rule in dependence on a result of said comparing step.

13. The system of claim 12, wherein the display engine is capable to present the information in a pop-up window.

14. The system of claim 12, wherein the display engine is capable to present the information at a user-specified position.

15. The system of claim 12, wherein the display engine is capable to present the information at a default position.

16. The system of claim 12, wherein the display engine is capable to present the information over an HTML banner.

17. The system of claim 10, wherein the Continuous Messaging Unit means (112) is further capable to make the determination based on a sub-string of the URL.

18. A method, comprising:
providing a message server (108);
receiving a request at the message server (108) from a client computer (104), such request identifying a website with which the client computer (104) has initiated contact by downloading a webpage,
**characterized in that**
said message server (108) has stored therein a set of context rules (520) and content (510), the content (510) being associated with specific rules (520), and by the step of
determining which of the context rules (520) and associated content (510) are appropriate for transmission to the client computer (104).

19. The method of claim 18, further comprising transmitting the determined context rules (520) and associated content (510).

20. The method of claim 18, wherein the determining is further based on a user ID (113) transmitted with the request.

21. The method of claim 20, wherein the determining is further based on historical-based targeting data (430) providing historical information about the user behavior.

22. A computer-readable medium having stored thereon instructions for executing, when used in a computer system, the method according to any one of claims 18-21.

## Patentansprüche

1. Verfahren zum Präsentieren von Inhalt an einen Internetbenutzer eines Client-Computers (104), umfassend die Schritte:
Herunterladen einer Webseite von einem ersten Server (106) zu dem Client-Computer (104) über das Internet (102); und
Einsetzen einer Client-residenten kontinuierlichen Nachrichten-Einheit (112), umfassend die Schritte
Übertragen einer URL der Webseite zu einem Nachrichtenserver (108);
Empfangen einer kontinuierlichen Nachrichten-Einheit (500), welche Kontextregeln (520) und den Regeln (520) zugeordneten Inhalt (510) umfasst, von dem Nachrichtenserver (108);
**dadurch gekennzeichnet, dass** der Schritt des Einsetzens der Client-residenten kontinuierlichen Nachrichten-Einheit (112) weiterhin die Schritte umfasst:
Parsen des Titels, Kontexts und Inhalts der Webseite;
Vergleichen der Ergebnisse des Parsing-Schritts mit den Kontextregeln (520), um zu bestimmen, ob irgendeine derartige Regel (520) erfüllt ist;
Reagieren auf eine Erfüllung einer Regel, indem der Client-Computer (104) gesteuert wird, um dem Benutzer den einer derartigen Regel zugeordneten Inhalt (510) anzuzeigen.

2. Verfahren nach Anspruch 1, wobei die Regeln für eine bestimmte Domäne sind.

3. Verfahren nach Anspruch 1, weiterhin umfassend ein Präsentieren des einer derartigen Regel zugeordneten Inhalts (510) in Abhängigkeit von einem Ergebnis des Vergleichsschritts.

4. Verfahren nach Anspruch 3, wobei das Präsentieren die Information in einem Einblendfenster präsentiert.

5. Verfahren nach Anspruch 3, wobei das Präsentieren die Information an einer benutzerbestimmten Position präsentiert.

6. Verfahren nach Anspruch 3, wobei das Präsentieren die Information an einer vorgegebenen Position präsentiert.

7. Verfahren nach Anspruch 3, wobei das Präsentieren die Information über ein HTML-Banner präsentiert.

8. Verfahren nach Anspruch 1, wobei das Bestimmen weiterhin auf einer Teilzeichenfolge der URL basiert.

9. Computerlesbares Medium mit darauf gespeicherten Anweisungen zur Ausführung des Verfahrens nach einem der Ansprüche 1-8 bei Verwendung in einem Computersystem.

10. System, umfassend:
einen Client-Computer (104), umfassend Web-Engine-Mittel (110) zum Herunterladen einer Webseite von einem ersten Server (106) zu dem Client-Computer (104) über das Internet (102);
Kommunikationsmittel (300) zum Übertragen der URL der Webseite zu einem zweiten Server (108); und
Empfangen einer kontinuierlichen Nachrichten-Einheit (500), welche Kontextregeln (520) und derartigen Regeln (520) zugeordneten Inhalt (510) umfasst, von dem zweiten Server (108);
**dadurch gekennzeichnet,**
**dass** der Client-Computer (104) weiterhin kontinuierliche Nachrichten-Einheit-Mittel (112; 310, 320, 325) umfasst zum Parsen des Titels, Kontexts und Inhalts der Webseite;
Vergleichen der Ergebnisse des Parsing-Schritts mit den Kontextregeln (520), um zu bestimmen, ob irgendeine derartige Regel (520) erfüllt ist; und
Reagieren auf eine Erfüllung einer Regel, indem dem Benutzer der einer derartigen Regel (520) zugeordnete Inhalt (510) angezeigt wird.

11. System nach Anspruch 10, wobei die Regeln für eine bestimmte Domäne sind.

12. System nach Anspruch 10, weiterhin umfassend eine Anzeige-Engine, welche in der Lage ist, den einer derartigen Regel zugeordneten Inhalt (510) in Abhängigkeit von einem Ergebnis des Vergleichsschritts zu präsentieren.

13. System nach Anspruch 12, wobei die Anzeige-Engine in der Lage ist, die Information in einem Einblendfenster zu präsentieren.

14. System nach Anspruch 12, wobei die Anzeige-Engine in der Lage ist, die Information an einer benutzerbestimmten Position zu präsentieren.

15. System nach Anspruch 12, wobei die Anzeige-Engine in der Lage ist, die Information an einer vorgegebenen Position zu präsentieren.

16. System nach Anspruch 12, wobei die Anzeige-Engine in der Lage ist, die Information über ein HTML-Banner zu präsentieren.

17. System nach Anspruch 10, wobei die kontinuierliche Nachrichten-Einheit-Mittel (112) weiterhin in der Lage sind, die Bestimmung basierend auf einer Teilzeichenfolge der URL vorzunehmen.

18. Verfahren, umfassend:
Bereitstellen eines Nachrichtenservers (108);
Empfangen einer Anfrage an dem Nachrichtenserver (108) von einen Client-Computer (104), wobei eine derartige Anfrage eine Website identifiziert, mit welcher der Client-Computer (104) durch Herunterladen einer Webseite einen Kontakt eingeleitet hat,
**dadurch gekennzeichnet,**
**dass** der Nachrichtenserver (108) eine Gruppe von Kontextregeln (520) und Inhalt (510) gespeichert hat, wobei der Inhalt (510) bestimmten Regeln (520) zugeordnet ist, und
durch den Schritt eines Bestimmens, welche der Kontextregeln (520) und zugeordneten Inhalt (510) für eine Übertragung zu dem Client-Computer (104) passend sind.

19. Verfahren nach Anspruch 18, weiterhin umfassend ein Übertragen der bestimmten Kontextregeln (520) und des zugeordneten Inhalts (510).

20. Verfahren nach Anspruch 18, wobei das Bestimmen weiterhin auf einer Benutzer-ID (113) basiert, welche mit der Anfrage übertragen wird.

21. Verfahren nach Anspruch 20, wobei das Bestimmen weiterhin auf historienbasierten Zieldaten (430) basiert, welche eine historische Information über das Nutzerverhalten bereitstellen.

22. Computerlesbares Medium mit darauf gespeicherten Anweisungen zur Ausführung des Verfahrens nach einem der Ansprüche 18-21 bei Verwendung in einem Computersystem.

## Revendications

1. Procédé de présentation d'un contenu à un utilisateur Internet d'un ordinateur client (109), comprenant les étapes suivantes :
télécharger une page Internet à partir d'un premier serveur (106) vers l'ordinateur client (104) par le biais d'Internet (102) ; et
utiliser une unité de messagerie continue de client résident (112), comprenant les étapes suivantes :
transmettre une URL de la page Internet vers un serveur de messagerie (108) ;
recevoir du serveur de messagerie (108) une unité de message continu (500), comprenant des règles de contexte (520) et un contenu (510) associé avec les règles (520) ;
**caractérisé en ce que** ladite étape d'utilisation de l'unité de messagerie continue de client résident (112) comprend en outre les étapes suivantes:
analyser le titre, le contexte et le contenu de la page Internet ;
comparer les résultats de l'étape d'analyse avec les règles de contexte (520) afin de déterminer si une, quelconque, de telles règles (520) est satisfaite ;
répondre à la satisfaction d'une règle en dirigeant l'ordinateur client (104) pour qu'il affiche pour l'utilisateur le contenu (510) associé avec une telle règle.

2. Procédé selon la revendication 1, dans lequel les règles sont destinées à un domaine spécifique.

3. Procédé selon la revendication 1, comprenant en outre la présentation du contenu (510) associé avec une telle règle en fonction d'un résultat de ladite étape de comparaison.

4. Procédé selon la revendication 3, dans lequel la présentation présente les informations dans une fenêtre contextuelle.

5. Procédé selon la revendication 3, dans lequel la présentation présente les informations en une position spécifiée par l'utilisateur.

6. Procédé selon la revendication 3, dans lequel la présentation présente les informations en une position par défaut.

7. Procédé selon la revendication 3, dans lequel la présentation présente les informations sur une bannière HTML.

8. Procédé selon la revendication 1, dans lequel la détermination est basée en outre sur une chaîne secondaire de l'URL.

9. Support pouvant être lu par ordinateur ayant des instructions stockées sur celui-ci pour exécuter, lorsqu'il est utilisé dans un système informatique, le procédé selon l'une quelconque des revendications 1 à 8.

10. Système, comprenant:
un ordinateur client (104) comprenant :
des moyens de moteur Internet (110) pour télécharger une page Internet à partir d'un premier serveur (106) vers l'ordinateur client (104) par le biais d'Internet (102) ;
des moyens de communication (300) pour
transmettre l'URL de la page Internet vers un second serveur (108) ; et
recevoir depuis le second serveur (108) une unité de message continu (500), comprenant des règles de contexte (520) et un contenu (510) associé avec de telles règles (520) ;
**caractérisé en ce que** ledit ordinateur client (104) comprend en outre une unité de messagerie continue (112 ; 310, 320, 325) pour
analyser le titre, le contexte et le contenu de la page Internet ;
comparer les résultats de l'étape d'analyse avec les règles de contexte (520) pour déterminer si l'une quelconque de telles règles (520) est satisfaite ; et
répondre à la satisfaction d'une règle en affichant pour l'utilisateur le contenu (510) associé avec une telle règle (520).

11. Système selon la revendication 10, dans lequel les règles sont destinées à un domaine spécifique.

12. Système selon la revendication 10, comprenant en outre un moteur d'affichage capable de présenter le contenu (510) associé avec une telle règle en fonction d'un résultat de ladite étape de comparaison.

13. Système selon la revendication 12, dans lequel le moteur d'affichage est capable de présenter les informations dans une fenêtre contextuelle.

14. Système selon la revendication 12, dans lequel le moteur d'affichage est capable de présenter les informations en une position spécifiée par l'utilisateur.

15. Système selon la revendication 12, dans lequel le moteur d'affichage est capable de présenter les informations en une position par défaut.

16. Système selon la revendication 12, dans lequel le moteur d'affichage est capable de présenter les informations sur une bannière HTML.

17. Système selon la revendication 10, dans lequel les moyens d'unité de messagerie continue (112) sont en outre capables de faire la détermination sur la base d'une chaîne secondaire de l'URL.

18. Procédé comprenant :
la mise à disposition d'un serveur de message (108);
la réception d'une requête au niveau du serveur de message (108) provenant d'un ordinateur client (104), une telle requête identifiant un site Internet avec lequel l'ordinateur client (104) a initié un contact en téléchargeant une page Internet,
**caractérisé en ce que**
ledit serveur de message (108) a stocké sur celui-ci un ensemble de règles de contexte (520) et un contenu (510), le contenu (510) étant associé avec des règles spécifiques (520) et par l'étape suivante
déterminer laquelle des règles de contexte (520) et le contenu associé (510) est appropriée pour une émission vers l'ordinateur client (109).

19. Procédé selon la revendication 18, comprenant en outre l'émission des règles de contexte déterminées (520) et du contenu associé (510).

20. Procédé selon la revendication 18, dans lequel la détermination est en outre basée sur une ID d'utilisateur (113) émise avec la requête.

21. Procédé selon la revendication 20, dans lequel la détermination est en outre basée sur des données de ciblage basées sur l'historique (430) produisant des informations d'historique concernant le comportement de l'utilisateur.

22. Support pouvant être lu par ordinateur ayant stocké sur celui-ci des instructions pour exécuter, lorsqu'il est utilisé dans un système informatique, le procédé selon l'une quelconque des revendications 18 à 21.
